# EUROPEAN PATENT SPECIFICATION

(11) **EP 0 736 144 B1**
(45) Date of publication and mention of the grant of the patent: **30.08.2000**
(21) Application number: 94902354.3
(22) Date of filing: 22.11.1993
(51) Int. Cl.: F16B 13/04, F16B 21/00, F16B 25/00, F16B 37/16, F16B 13/08, F16B 13/00

(54) **ANCHORING RETAINER FOR THREADED FASTENERS**
VERANKERUNGSBEFESTIGUNG FÜR MIT GEWINDE VERSEHENEM BEFESTIGUNGSELEMENT
ATTACHE D'ANCRAGE POUR FIXATIONS FILETEES

(43) Date of publication of application: 09.10.1996
(73) Proprietor: DRY DOCK INDUSTRIES, INC., Frenton, MI 48430 (US)
(72) Inventor: SMITH, Jon, D., Fenton, MI 48430 (US)
(74) Representative: Moreland, David, Dr.
(86) International application number: US9311361
(87) International publication number: WO9412797

(56) References cited:
- WO-A-90/05855
- AU-B- 145 993
- CH-A- 130 506
- DE-A- 3 117 649
- FR-A- 2 614 658
- US-A- 2 913 953
- US-A- 3 061 888
- US-A- 3 362 280
- US-A- 3 385 156
- US-A- 3 387 642
- US-A- 3 453 927
- US-A- 3 904 032
- US-A- 3 935 786
- US-A- 4 322 194
- US-A- 4 642 009
- US-A- 4 834 601
- US-A- 4 943 253
- US-A- 4 984 946
- US-A- 5 205 688
- US-A- 5 244 324

## Description

### Field of the Invention

This invention relates to anchoring retainers used to secure threaded fasteners in a wall. More specifically, this invention relates to deflecting plastic retainers for use in a hollow wall or in a blind hole.

### Background of the Invention

Anchoring retainers of various types are commonly used to secure threaded fasteners in hollow walls and in blind holes. One of the most common anchoring retainers used with hollow walls is the metal wing toggle. Metal wing toggles have the advantage of being very strong but have the disadvantage of tending to rotate with the threaded fastener unless the threaded fastener is pulled on simultaneous with it being turned to tighten. Pulling the threaded fastener engages the wing toggle with an inner surface of the wall and prevents its rotation. It is readily apparent that this is a very awkward operation.

An improved anchoring retainer is shown in U.S. Patent No. 5,244,324 which is assigned to the assignee of the present invention. The subject anchoring retainer illustrates one method of preventing rotation of the retainer during installation of a threaded fastener. In that example, arms of the retainer are pulled tight against an inside of the wall to prevent rotation of the retainer. A threaded fastener, or screw, can then be threaded into the retainer. This wing design, however, occupies a large volume of space in its free state, making it somewhat cumbersome to handle and requiring a larger volume of space to store. It is desired to provide an anchoring retainer having a relatively simple form and requiring a minimum of raw material to fabricate while providing superior anchoring capabilities. CH-A-130506 discloses a retainer having a generally cylindrical body with a cavity, a head portion at one end and an outer portion at the other end, retention means limiting travel, a middle portion having legs and having hinges and being located adjacent the head and outer portion and at a mid location, the hinges providing subsections of length greater at the inner sub-section, the hinges being generally perpendicular to the axis.

### SUMMARY OF THE INVENTION

According to a first aspect of the present invention there is provided a retainer for receiving a threaded fastener comprising:
a generally cylindrical unitary body formed of plastic having a longitudinal axis and an axial cavity extending therealong, the body having a pair of axial ends;
an inner head portion positioned at one axial end having thread engaging means disposed in the axial cavity thereof;
an outer portion positioned at the other axial end having retention means for limiting axial travel of the retainer and with the axial cavity passing therethrough;
a middle portion disposed between the inner head portion and the outer portion with the axial cavity passing therethrough and having four legs defined by four longitudinally extending circumferentially spaced slots, and having hinges defined on the radially outer portion of the unitary body by a localized reduction in cross-sectional area of the legs with a hinge connecting each leg to the inner head portion and a hinge connecting each leg to the outer portion and with each leg having a mid-section hinge dividing the legs into inner and outer subsections wherein the inner subsection is longer than the outer subsection with the hinges generally perpendicular to the longitudinal axis; and
   said retainer being constructed such that, in use, said retailer has a collapsed configuration in which a point of each leg proximate to the mid-section hinge is axially nearer an outer end of the retainer than the hinge so that, in use a point of each outer leg proximate to the mid-section hinge is pressed against a side of a panel that the retainer is disposed in, and so that each outer leg is spaced from the side of the panel that the retainer is disposed in, and wherein further said inner subsection is in abutting contact with said outer subsection over an area extending radially inwardly from said midsection hinge.

The inner and outer sub-sections have their lengths configured so that as a threaded fastener passing through the outer and middle portions and engaging the inner head portion is turned, the discrete sections hinge or buckle outwardly at the mid-section hinges. The buckling or hinging movement continues until the outer sub-sections contact or abut an inner surface of the wall. At this point, the anchoring retainer has a generally truss-shaped configuration inside the wall. Tightening of the fastener continues, drawing the inner head portion ever closer to the wall, and moving the inner sub-section into contact with the outer sub-section to a nearly flat orientation. This develops a significant amount of compressive load against the wall. This compressive load greatly contributes to the anchor retainer effecting a very strong attachment to the wall providing a highly stable engagement means for the threaded fastener with the wall. Additionally, the retainer benefits from the relatively low vibration transmissibility characteristics of the plastic of which the retainer is formed to aid in damping vibrations transmitted both through the fastener to the wall and vice versa. This anchor has both high strength and high isolation capabilities.

According to a second aspect of the present invention there is provided a structural wall comprising:
a wall panel being formed with an aperture extending axially through said wall panel; and including:
a retainer received in said aperture for receiving a threaded fastener, said retainer comprising a generally cylindrical unitary body formed of plastic and extending along a longitudinal axis, said body having an axial cavity extending between a pair of axial ends, an inner head portion defined at one axial end of said body, said inner head portion having internal thread engaging means, an outer portion defined at the other axial end, said outer portion extending axially through said aperture such that an axially inner end of said outer portion extends through said wall panel, and said outer portion having means to limit axial travel of said retainer to ensure said retainer does not pass entirely axially inwardly through said aperture, and a middle portion defined between said inner head portion and said outer portion, and having a plurality of legs defined by a number of longitudinally extending circumferentially spaced slots, hinges defined on the radially outer portion of said body by a localized reduction in the cross-sectional area of said legs, a first hinge connecting each leg to said inner head portion, another hinge connecting each leg to said outer portion, and with each leg having a mid-section hinge dividing each leg into inner and outer subsections (40, 42); and
a threaded fastener received within said retainer and having threads engaged with said internal thread engaging means in said inner head portion, said threaded fastener having drawn said inner head portion towards said outer portion until each leg has an area adjacent its mid-section hinge pressed against a side of said panel, and each said leg outer subsection extending from said mid-section hinge being connected to said outer portion and spaced away from said panel, said inner subsection being in abutting contact with said outer subsection over an area extending radially inwardly from said mid-section hinge.

### BRIEF DESCRIPTION OF THE DRAWINGS

Figure 1 is an elevational view of an anchoring retainer inserted in a wall with a threaded fastener disposed therein.
Figure 2 is a view in the direction of arrows 2 of Figure 1.
Figure 3 is a view in the direction of arrows 3 of Figure 1.
Figure 4 is a view in the direction of arrows 4 of Figure 2 as it would appear if that section were rolled flat.
Figure 5a is a perspective view of a configuration of splines used for thread engagement.
Figure 5b is a perspective view of an alternative configuration of splines used for thread engagement.
Figure 6 is a view in the direction of arrows 6 of Figure 1.
Figure 7 is an elevational view of an anchoring retainer after the legs have started buckling or hinging.
Figure 8 is a side elevational view in which the legs have been collapsed to form a trussing structure.
Figure 9 is a side elevational view of an anchoring retainer in which the legs have been collapsed to nearly a flat position.
Figure 10 is a view in the direction of arrows 6 in Figure 1 of a first alternative embodiment.
Figure 11 is a view in the direction of arrows 6 of Figure 1 of a second alternative embodiment.
Figure 12 is a view in the direction of arrows 6 of Figure 1 of a third alternative embodiment of the retainer for square apertures.
Figure 13 is a view in the direction of arrows 6 of Figure 1 of a fourth alternative embodiment of the retainer for square apertures.
Figure 14 is a side elevational view of yet another embodiment of the anchoring retainer.
Figure 15 is an end view in the direction of arrows 15 of Figure 14.
Figure 16 is a side elevational view of the anchoring retainer of Figure 14 in a collapsed position.
Figure 17 is a side elevational view of yet another embodiment of the invention showing 4 hinges in each leg.
Figure 18 is a side elevational view of the embodiment shown in Figure 17 in a collapsed position.
Figure 19 is a side elevational view of yet another embodiment of the anchoring retainer.
Figure 20 is a view in the direction of arrows 20 of Figure 19.
Figure 21 is a side elevational view of the anchoring retainer of Figure 19 in a collapsed position.
Figure 22 is a side elevational view of yet another embodiment of the anchoring retainer.
Figure 23 is a sectional view of in the direction of arrows 23 of Figure 22.
Figure 24 is a side elevational view of yet another embodiment of the anchoring retainer.
Figure 25A is a view in the direction of arrow 25 of Figure 24 showing a first embodiment of a flapper.
Figure 25B is a view in the direction of arrow 25 of Figure 24 of a second embodiment of the flapper.
Figure 26 is a side elevational view of the embodiment of Figure 24 as it passes through a wall.
Figure 27 is a broken out portion of a side elevational view of the embodiment shown in Figure 24 after a retaining cap has been snugged against the wall.
Figure 28 is a side elevational view of the embodiment of Figure 24 after the legs have been collapsed.
Figure 29 is a side elevational view of yet another embodiment of the present invention.
Figure 30 is a plan view of a carrier belt for use with the present invention.
Figure 31 is a side elevational view of an inner portion showing yet another alternative embodiment.
Figure 32 is a view in the direction of arrows 32 in Figure 31.
Figure 33 is a side elevational view of an inner portion with a drill tip extending beyond the inner portion.
Figure 34 is a side elevational view of a retainer embodiment with a cutter blade disposed on the inner portion.
Figure 35 is an axial end view toward the outside portion of Figure 34.
Figure 36 is a side elevational view of an elongated driving tool.
Figure 37 is a aide elevational view of an alternative tip for the driving tool of Figure 36.
Figure 38 is a side elevational view of a drill tip insert.
Figure 39 is a side elevational view of an adapter sleeve.
Figure 40 is a side elevational view of two halves of a mold with an associated mold pin.

### DETAILED DESCRIPTION OF A PREFERRED EMBODIMENT

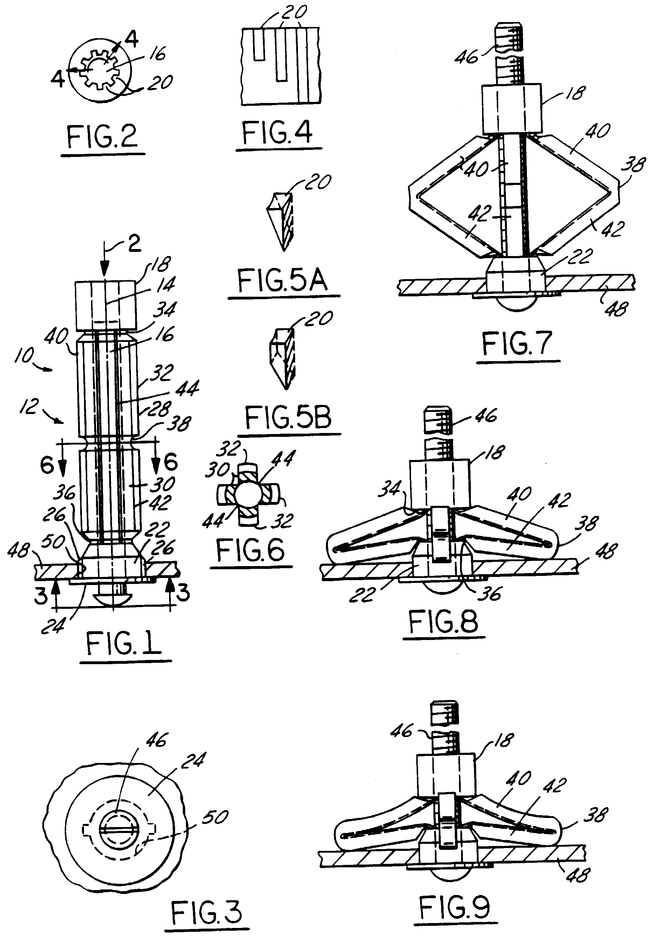

Figure 1 shows an anchoring retainer 10 having a generally cylindrical unitary body 12 with a longitudinal axis 14 and an axial cavity 16 extending therealong. The unitary body 12 has a pair of axial ends. An inner head portion 18 of the unitary body 12 is positioned at one axial end and has a plurality of tapered flutes or splines 20 serving as thread engaging means within the axial cavity 16. An outer portion 22 is positioned at the other axial end and has a flange 24 disposed thereon distal to the rest of the anchoring retainer 10. The outer portion 22 also has anti-rotation tabs 26 extending radially therefrom. A middle portion 28 is disposed between the inner head portion 18 and the outer portion 22. The axial cavity 16 passes through the length of the body 10. The middle portion 28 has a plurality of like shaped circumferentially equidistant longitudinal slots 30 which run the length of the middle portion 28 and define four identical legs or discrete sections 32.

The legs are distributed about the axis such that all side views centered on any one of the legs 32 would look the same. The longitudinal slots 30 are defined on the radially outer portion of the unitary body 12. The middle portion 28 also has hinges 34 connecting the legs to the inner head portion and hinges 36 connecting the legs to the outer portion. The legs also each have a mid-section hinge 38 dividing each leg 32 into an inner sub-section 40 and an outer sub-section 42. The inner sub-section 40 is proximate to the inner head portion 18 and is longer than the outer sub-section 42 which is most proximate to the outer portion 22. The hinges 34, 36, 38 are generally perpendicular to the longitudinal axis 14 and are defined by a localized reduction in the cross-sectional area of the legs 32 on the external periphery.

The cross-section shown in Figure 6 illustrates the reduction in cross-sectional area at the hinges. Figures 2, 4 and 5 illustrate the structure of the tapered spline 20. As is shown in Figure 2, there are nine splines paralleling the longitudinal axis and evenly distributed around the circumference of the axial cavity 16.

Figure 4 shows a flat projection of three juxtapositioned splines 20 illustrating their different lengths. The splines taper from the circumference of the axial cavity 16 to a common predetermined height.

The splines 20 shown in Figures 5a and 5b illustrate two potential configurations for them. In the configuration shown in Figure 5a, the splines 20 reach their common height only at an end of the spline. In the configuration shown in Figure 5b, the splines reach a common height at a point below the end of the spline. The second alternative spline configuration is readily seen as providing greater cumulative thread engagement than the first but would likely require greater installation effort to install a fastener. The cross-section shown in Figure 6 also illustrates a connecting web 44 disposed between the legs at the axial cavity 16.

The invention as shown in the embodiment of Figure 1 operates in the following manner. A threaded fastener or screw 46 is passed through an opening in the flange 24 and into the axial cavity 16. In this particular embodiment, the anchoring retainer 10 is inserted into a wall or panel 48 which has a preformed aperture complimentary in shape to the outer portion 22. The anti-rotation tabs 26 engage complimentary slots of the wall aperture. As the threaded fastener or screw 46 is turned, the anti-rotation tabs 26 prevent the anchoring retainer 10 from rotating in the wall 48. Threads on the screw engage the longest of the tapered splines 20. The threaded fastener 46 is turned, causing the threads thereof to engage the longest of the tapered splines 20. Continued turning of the screw brings it into threading engagement with all nine splines disposed within the axial cavity and draws a head of the screw 46 up against the flange 24 of the anchoring retainer. Continued turning of the screw 46 produces an axially compressive force in the legs 32. Further tightening of the screw causes the connecting webs 44 to split or rupture and the legs 32 to buckle radially outward, bending at their hinge points 34, 36, 38. Other embodiments not having the webs 44 would similarly buckle without rupturing any web.

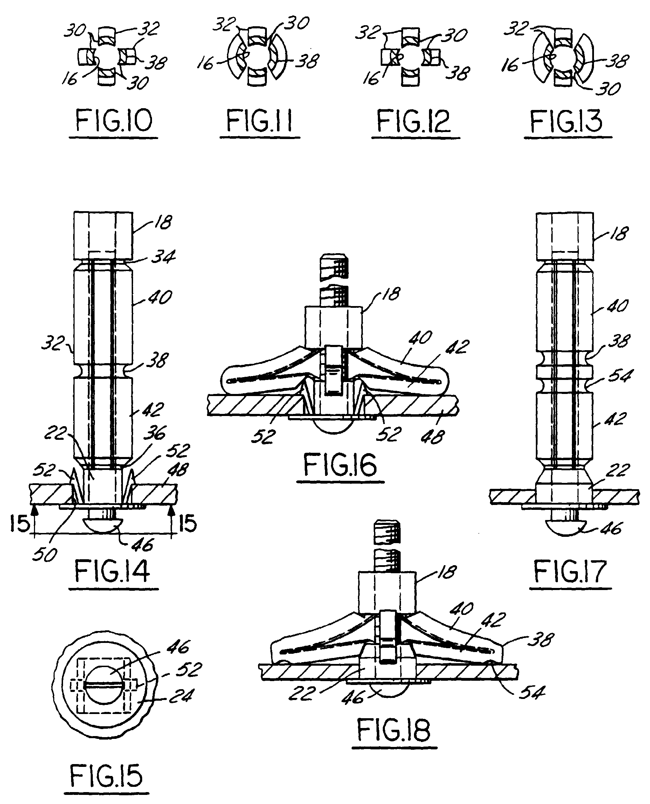

An anchoring retainer with buckled legs is shown in Figure 7. Continued turning of the screw 46 draws the inner portion 18 yet closer to the outer portion 22 and the wall 48, to a point where the outer sub-sections 42 contact an inner surface of the wall 48 to form the truss like shape shown in Figure 8. Yet further tightening of the screw 46 causes the inner sub-sections and the outer sub-sections 42 to deflect to nearly a flat position as shown in Figure 9. The outer sub-sections 42 abut the inner surface of the wall, the outer sub-sections 42 and the inner sub-sections 40 foldingly abutting each other, and the inner sub-sections 40 foldingly abutting the inner head portion proximate to the hinges 34 therebetween. It is this collapsing from the truss shape to the nearly flat shape which produces the particularly high clamp loads charcteristic of this retainer.

It should be noted that it is necessary for the inner sub-sections 40 to be longer than the outer sub-sections 42 in order for the outer sub-sections to contact the inner surface of the wall 48 before the legs 32 have been essentially flattened.

Many alternative embodiments are anticipated for specialized uses of this retainer design.

Figure 10 shows a cross-section of a middle portion 28 similar to that shown in Figure 6 except lacking the connecting webs 44. Figure 11 shows an alternative embodiment also lacking connecting webs but with two opposed legs having appreciably greater cross-sectional areas than the other two legs 32. This provides an anchoring retainer 10 with an ability to sustain greater loads than anchoring retainers 10 with smaller identical legs 32.

Figures 12 and 13 illustrate anchoring retainers 10 designed for use with square apertures. Square apertures have the advantage of not requiring additional anti-rotation means such as tabs 26 at the outer portion 22. Figure 12 shows the cross-section of an anchoring retainer 10 having four identical legs 32 for use in a square aperture. Figure 13 shows the cross-section of an anchoring retainer 10 having two larger cross-sectional legs 32. The larger legs here also offer a potential increase in strength of the anchoring retainer.

It should be noted that a wide variety of other configurations not shown here is possible as well. One possibility is a D-shaped anchoring retainer 10 having a single flat side to prevent rotation in a similarly shaped aperture.

Figure 14 illustrates a configuration which prevents an anchoring retainer 10 from falling back out of an aperture into which it has been inserted before the screw 46 has been tightened to collapse the legs 32. A pair of barbed tines 52 extend from the outer portion 22 at an angle to the longitudinal axis 14. In a free state, the tines project radially outward beyond the aperture in the wall 48 into which the anchoring retainer 10 is to be inserted. When the anchoring retainer 10 is inserted into the wall 48, the tines 52 fold inwardly against the outer portion as the outer portion enters the wall aperture 50. When the anchoring retainer 10 is fully inserted with the flange 24 pressed against an outside of the wall, the barbed tines 52 will have snapped radially outward to provide engagement with the wall 48. This effectively traps the retainer 10 in the wall with axial motion being limited by the flange 24 and the barbed tines 52. It is anticipated that this configuration would be most effective when used with walls made of relatively stiff material such as steel, plastic composites, or laminates.

As shown in Figure 16, there can be contact between the collapsed legs 32 and the barbed tines 52. This is largely inconsequential, however, as the retaining function provided by the barbed tines 52 is no longer necessary when the legs 32 have been completely collapsed.

Figure 15 shows the anchoring retainer 10 in this embodiment to have a cross-section suited for use with a square aperture. This prevents rotation of the anchoring retainer 10 as the screw is being threaded therein.

Figures 17 and 18 show an alternative embodiment of the invention having second mid-section hinges 54 in close proximity to the other mid-section hinges 38 in each of the legs. A distance between the hinge 34 at the inner head portion 18 and the most proximate mid-section hinge 38 is greater than a distance from the same mid-section hinge 38 to the hinge 36 connecting the leg 32 with the outer portion 22. This requirement allows that portion of the legs between the mid-section hinges 38 and 54 to contact the inner surface of the wall 48 after the legs 32 have been collapsed.

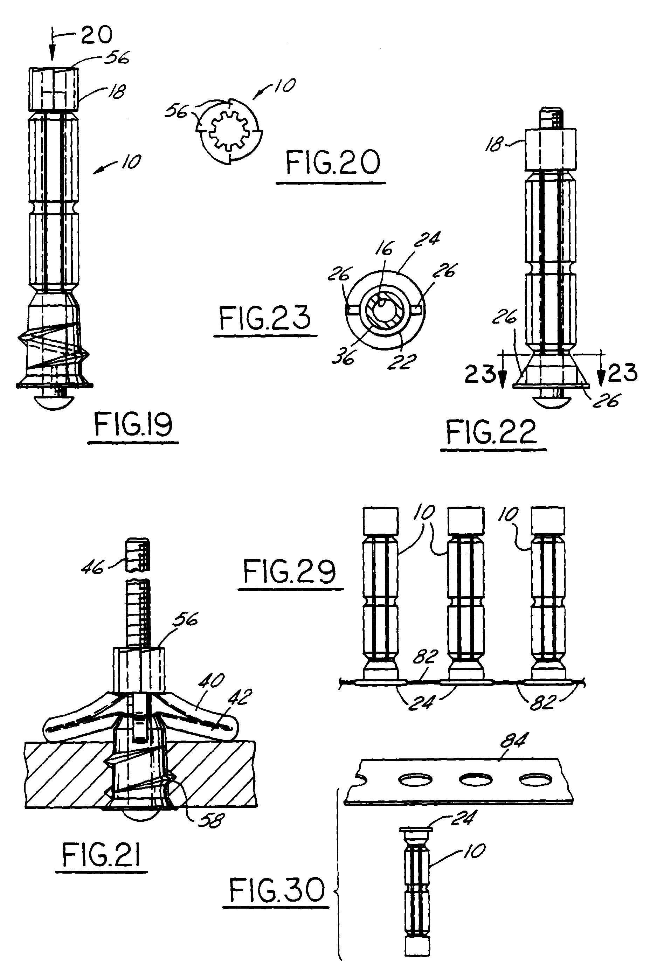

Figure 19 shows an anchoring retainer 10 with an inner head portion 18 having an integrally formed four flute boring tip 56. The anchoring retainer 10 of Figure 19 also has a rotative lock means provided by a thread form 58 on the outer portion 22. The thread form 58 restricts rotation of the anchoring retainer 10 in the clockwise direction, allowing the screw 46 to be threaded into the tapered flutes 20 to draw down the inner portion 18 as shown in Figure 21.

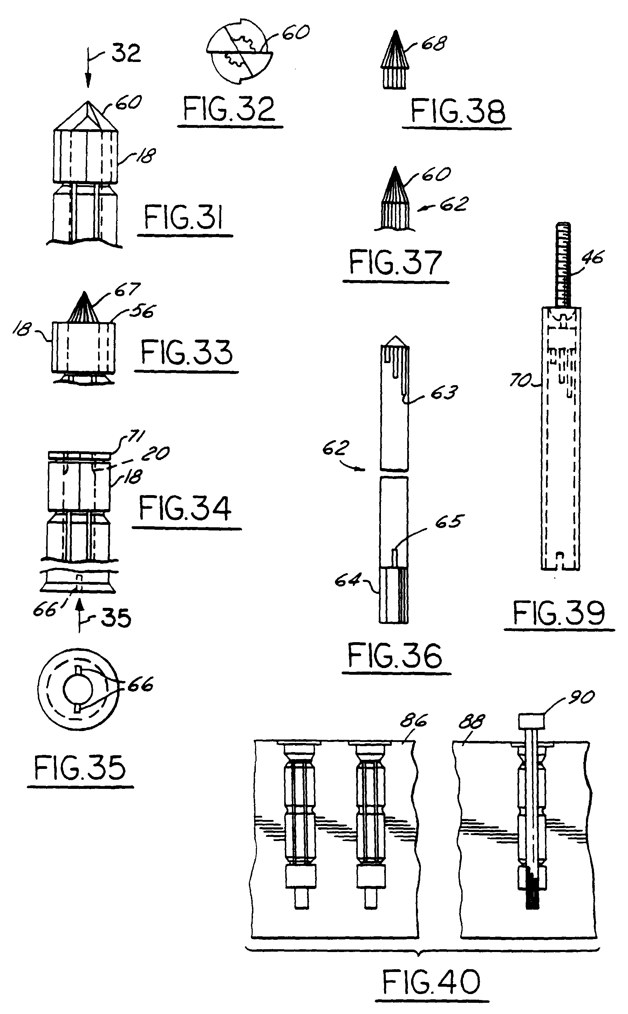

Figures 31 and 32 show a related inner head portion configuration having a four flute design, but capped by a two fluted drill tip 60. In such an embodiment, the screw 46 would separate the drill tip flutes to exit the inner head portion 18. A driving tool 62 is shown in Figure 36. The driving tool 62 has flutes or splines 63 at one end complimentary in shape to the splines 20 in the inner head portion 18. On a second end, the driving tool 62 has a slot 65 for engagement by a driving bit 64 driven by a drill motor or the like. The driving bit 64 has a blade sufficiently wide to engage both the slot 65 of the driving tool 62 and a drive area 66 of the outer portion 22 shown in Figures 19, 34 and 35. Simultaneous engagement of both the inner portion and the outer portion by the driving tool and driving bit respectively prevents the anchoring retainer 10 from being twisted apart at one of the hinges when the inner head portion sustains the torsional loads associated with boring into a wall and the outer head portion sustains the torsional loads associated with threadably engaging the wall with the thread form 58. It is anticipated that anchoring retainers 10 having integrally formed boring tips 56, drill tips 60 and thread forms 58 as described would be employed with relatively soft wall material such as construction drywall.

Figures 22 and 23 show anti-rotation tabs 26 appropriate for use with construction drywall which require the provision of no complimentary slots, as the tabs will displace the drywall material.

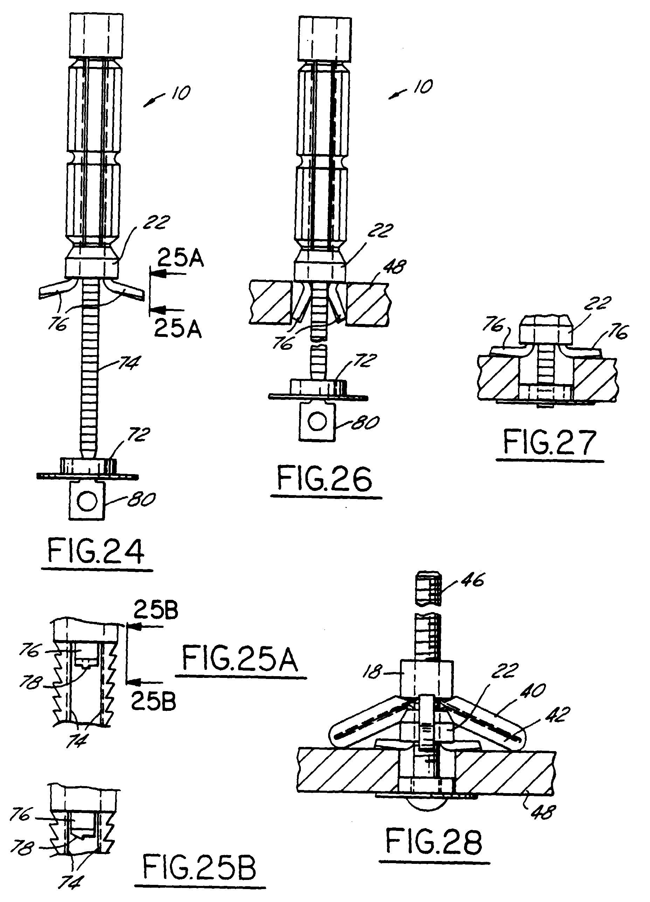

Figures 24, 25A, 25B, 26, 27 and 28 all show a cap 72 and strip 74 configuration like that described in U.S. Patent No. 5,244,324 issued on September 14, 1993, assigned to the assignee of the present invention, and hereby incorporated by reference. This embodiment of the of the invention has a pair of flip fins extending radially from the outer portion. The flip fins 76 deflect radially inward as shown in Figure 26 when the anchoring retainer 10 is passed through the wall 48. Once the retainer 10 has completely passed through the wall aperture 50, the flip fins 76 resume their radially extended position. The flip fins 76 have engaging teeth 78 as shown in two alternative forms in Figure 25A and 25B. The engaging teeth 78 are pressed into contact with the inner surface of the wall when the strips are tensionally loaded by an installer pulling on an end block 80. The cap 72 is then pressed upward into the wall aperture 50. Engaging means between the cap 72 and the strips 74 resist any displacement of the cap away from the retainer 10. The screw is then installed in the retainer, drawing the inner portion toward the wall and the outer portion to a relatively flat position as shown in Figure 28.

Figure 29 shows a plurality of anchoring retainers 10 connected at their outer portions 22 by a simultaneously molded connecting strip 82. The connecting strip 82 has a thinner section than the flanges 24 of the retainers 10. The flange 24 to strip 82 interface is configured to facilitate separation of the retainers 10 from the strip 82. Molding anchoring retainers 10 connected in this fashion lends itself to dispensing the retainers in a semi-automatic or automatic feed installation device similar to air powered installation devices used to install conventional nails. An alternative variation of this concept is illustrated in Figure 30 which shows a belt into which anchoring retainers can be temporarily installed. Anchoring retainers 10 would be snapped into and out of the belt 84 with the flange 24 engaging openings in the belt 84.

Figure 33 shows a drill tip forming 67 molded integral with and extending from the inner head portion with cutting flutes formed by extensions of the splines 20 of the inner head portion 18. Such a forming 67 can be used to initiate the drilling of a hole.

Figure 38 shows a drill tip insert 68 which can be used to initiate the forming of a hole. The drill tip insert 68 is formed of a relatively hard material and has splines on a shank portion which engage the splines within the inner head portion. Cutting flutes are disposed on a tip portion of the insert. The flutes can be extensions of the splines of the shank portion of the drill tip insert. When installed for use in a retainer, it would appear much like Figure 33.

Additionally, the driving tool 62 can be formed with a tip shaped identical to the drill tip insert 68 extending from the splines of the driving tool 62 as shown in Figure 37.

Figure 39 shows an adapter sleeve 70 which can be used to install the screw 46.

Figure 34 shows a retainer having a boring tip in the form of a cutter blade 71 disposed on an end of the inner head portion. The cutter blade 71 is formed of a hard plastic or of steel and has axially extending teeth, not shown. The cutter blade 71 has splines engaging the splines 20 of the inner head portion 18. The cutter blade is displaced from the inner head portion by the screw 46 when it is tightened. Figure 35 shows an axial end view of the retainer of Figure 34 looking toward the outer end.

While the discussion of the preferred embodiment of the invention describes the installation of subject anchoring retainers 10 into hollow walls 48, it is also readily apparent that such anchoring retainers 10 could be beneficially employed in blind holes as well. As the legs 32 begin expanding radially outward, they would engage the wall into which they were inserted, resisting removal of the retainer from the hole.

It is also to be appreciated that although the bulk of this discussion has been directed to embodiments having four legs, it is anticipated that configurations with more legs or fewer legs and an even or an odd amber of legs are possible. Retainers having two legs, while providing less lateral stability, might be able to fit into spots too narrow to allow the flattening of four legs.

A further advantage of this invention over known retainers is that it easily lends itself to manufacture. The embodiments shown in the Figures can be easily fabricated using a two-piece A-B mold 86, 88 with a molding pin 90 disposed therebetween. The molding pin is of a predetermined diameter and has spline forms cut into the predetermined diameter. Two mold sections have opposing cavities with longitudinal ridges of a height which define a diameter equal to or alternatively slightly greater than the predetermined diameter of the pin. The ridges also define a longitudinal axis of the cavity formed by mating the mold sections. The ridges in the mold form the slots in the middle portion without any need for blades or the like. With the mold sections mated together, and the pin disposed therein, molten plastic is injected under pressure into the mold. The plastic is cooled, the pin withdrawn from the now solidified plastic, and the mold section 86, 88 separated normal to a split line. The finished retainer 10 is then removed from the mold.

## Claims

1. A retainer (10) for receiving a threaded fastener (46) comprising:
a generally cylindrical unitary body (12) formed of plastic having a longitudinal axis (14) and an axial cavity (16) extending therealong, the body having a pair of axial ends;
an inner head portion (18) positioned at one axial end having thread engaging means (20) disposed in the axial cavity (16) thereof;
an outer portion (22) positioned at the other axial end having retention means (24) for limiting axial travel of the retainer and with the axial cavity passing therethrough;
a middle portion (28) disposed between the inner head portion and the outer portion with the axial cavity passing therethrough and having four legs (32) defined by four longitudinally extending circumferentially spaced slots (30), and having hinges (34, 36) defined on the radially outer portion of the unitary body by a localized reduction in cross-sectional area of the legs with a hinge connecting each leg to the inner head portion and a hinge connecting each leg to the outer portion and with each leg having a mid-section hinge (38) dividing the legs into inner and outer subsections (40, 42) wherein the inner subsection is longer than the outer subsection with the hinges generally perpendicular to the longitudinal axis; and
said retainer being constructed such that, in use, said retailer has a collapsed configuration in which a point of each leg proximate to the mid-section hinge is axially nearer an outer end of the retainer (10) than the hinge (36) so that, in use a point of each outer subsection proximate to the mid-section hinge is pressed against a side of a panel (48) that the retainer is disposed in, and so that each outer subsection is spaced from the side of the panel that the retainer is disposed in, and wherein further said inner subsection is in abutting contact with said outer subsection over an area extending radially inwardly from said midsection hinge.

2. A structural wall comprising:
a wall panel (48) being formed with an aperture extending axially through said wall panel; and including:
a retainer (10) received in said aperture for receiving a threaded fastener (46), said retainer comprising a generally cylindrical unitary body (12) formed of plastic and extending along a longitudinal axis (14), said body having an axial cavity (16) extending between a pair of axial ends, an inner head portion (18) defined at one axial end of said body, said inner head portion having internal thread engaging means (20), an outer portion (22) defined at the other axial end, said outer portion extending axially through said aperture such that an axially inner end of said outer portion extends through said wall panel, and said outer portion having means (24) to limit axial travel of said retainer to ensure said retainer does not pass entirely axially inwardly through said aperture, and a middle portion (28) defined between said inner head portion and said outer portion, and having a plurality of legs (32) defined by a number of longitudinally extending circumferentially spaced slots (30), hinges (34, 36) defined on the radially outer portion of said body by a localized reduction in the cross-sectional area of said legs, a first hinge connecting each leg to said inner head portion, another hinge connecting each leg to said outer portion, and with each leg having a mid-section hinge (38) dividing each leg into inner and outer subsections (40, 42); and
a threaded fastener (46) received within said retainer and having threads engaged with said internal thread engaging means in said inner head portion, said threaded fastener having drawn said inner head portion towards said outer portion until each leg has an area adjacent its mid-section hinge pressed against a side of said panel, and each said leg outer subsection extending from said mid-section hinge being connected to said outer portion and spaced away from said panel, said inner subsection being in abutting contact with said outer subsection over an area extending radially inwardly from said mid-section hinge.

3. A wall as claimed in Claim 2, wherein said inner subsection is longer than said outer subsection.

4. A wall as claimed in Claim 2, wherein said hinges extend for the entire circumferential width of said legs, said hinges being formed by having a reduced radial thickness relative to said inner and outer subsections, and said reduced radial thickness being at an outer peripheral surface of said body.

## Patentansprüche

1. Eine Aufnahme (10) zum Aufnehmen eines mit einem Gewinde versehenen Befestigungselements (46) mit:
einem im allgemeinen zylindrischen unitären Körper (12) aus Kunststoff mit einer Längsachse (14) und einem axialen Hohlraum (16), welcher sich hier entlang erstreckt, wobei der Körper ein Paar axialer Enden aufweist;
einem inneren Kopfbereich (18) an einem axialen Ende mit Gewindeeingriffsmitteln (20) in dem axialen Hohlraum (16) hiervon;
einem äußeren Bereich (22) an dem anderen axialen Ende mit Haltemitteln (24) zur Begrenzung einer axialen Bewegung der Aufnahme, wobei der axiale Hohlraum dadurch hindurchgeht;
einem Mittelbereich (28) zwischen dem inneren Kopfbereich und dem äußeren Bereich, wobei der axiale Hohlraum dadurch hindurchgeht, und mit vier Füßen (32), definiert durch vier sich längs erstreckende, peripher beabstandete Schlitze (30), und mit Scharnieren (34, 36), definiert auf dem radial äußeren Bereich des unitären Körpers durch eine lokalisierte Verringerung im Querschnittebereich der Füße, wobei ein Scharnier jeden Fuß mit dem inneren Kopfbereich verbindet und ein Scharnier jeden Fuß mit dem äußeren Bereich verbindet, und wobei jeder Fuß ein Scharnier (38) im Mittelabschnitt aufweist, wodurch die Füße in einen inneren und einen äußeren Unterabschnitt (40, 42) geteilt sind, wobei der innere Unterabschnitt länger als der äußere Unterabschnitt ist, wobei die Scharniere im allgemeinen senkrecht zur Längsachse sind; und
wobei die Aufnahme so konstruiert ist, daß die Aufnahme im Gebrauch eine kollabierte Konfiguration aufweist, wobei ein Punkt jedes Fußes nahe des Scharniers des Mittelabschnitts einem äußeren Ende der Aufnahme (10) axial näher ist als das Scharnier (36), so daß im Gebrauch ein Punkt jedes äußeren Unterabschnitts nahe des Scharniers des Mittelabschnitts gegen eine Seite einer Platte (48) gepreßt ist, worin sich die Aufnahme befindet, und so daß jeder äußere Unterabschnitt von der Seite der Platte beabstandet ist, worin sich die Aufnahme befindet, und wobei des weiteren der innere Unterabschnitt sich in anstoßendem Kontakt mit dem äußeren Unterabschnitt über einen Bereich mit einem Verlauf radial nach innen von dem Scharnier des Mittelabschnitts befindet.

2. Strukturwand, umfassend:
eine Wandplatte (48), welche mit einer Öffnung ausgebildet ist, welche sich axial durch die Wandplatte erstreckt; und umfassend:
eine in der Öffnung aufgenommene Aufnahme (10) zum Aufnehmen eines mit einem Gewinde versehenen Befestigungselemente (46), wobei die Aufnahme einen im allgemeinen zylindrischen unitären Körper (12) aus Kunststoff mit einem Verlauf entlang einer Längsachse (14) aufweist, wobei der Körper einen axialen Hohlraum (16) mit einem Verlauf zwischen einem Paar axialer Enden aufweist, einen inneren Kopfbereich (18), definiert an einem axialen Ende des Körpers, wobei der innere Kopfbereich Innengewindeeingriffsmittel (20) aufweist, einen an dem anderen axialen Ende definierten äußeren Bereich (22), wobei sich der äußere Bereich axial durch die Öffnung erstreckt, so daß ein axial inneres Ende des äußeren Bereichs sich durch die Wandplatte erstreckt, und wobei der äußere Bereich Mittel (24) aufweist, um eine axiale Bewegung der Aufnahme zu begrenzen, um sicherzustellen, daß die Aufnahme nicht vollständig axial nach innen durch die Öffnung geht, und einen Mittelbereich (28), definiert zwischen dem inneren Kopfbereich und dem äußeren Bereich, und umfassend eine Mehrzahl von Füßen (32), definiert durch eine Anzahl von sich längs erstreckender peripher beabstandeter Schlitze (30), Scharniere (34, 36), definiert auf dem radial äußeren Bereich des Körpers durch eine lokalisierte Verringerung im Querschnittebereich der Füße, wobei ein erstes Scharnier jeden Fuß mit dem inneren Kopfbereich verbindet, ein anderes Scharnier jeden Fuß mit dem äußeren Bereich verbindet, und wobei jeder Fuß ein Scharnier (38) im Mittelabschnitt aufweist, wodurch jeder Fuß in einen inneren und einen äußeren Unterabschnitt (40, 42) geteilt ist; und
ein in der Aufnahme aufgenommenes, mit einem Gewinde versehenes Befestigungselement (46) mit Windungen in Eingriff mit den Innengewindeeingriffemitteln in dem inneren Kopfbereich, wobei der innere Kopfbereich durch das mit einem Gewinde versehene Befestigungselement zum äußeren Bereich gezogen ist, bis bei jedem Fuß ein Bereich benachbart zum Scharnier im Mittelabschnitt gegen eine Seite der Platte gedrückt ist, und jeder äußere Fußunterabschnitt, welcher sich von dem Scharnier im Mittelabschnitt erstreckt, mit dem äußeren Bereich verbunden ist und von der Platte beabstandet ist, wobei der innere Unterabschnitt sich in anstoßendem Kontakt mit dem äußeren Unterabschnitt über einen Bereich mit einem Verlauf radial nach innen von dem Scharnier des Mittelabschnitts befindet.

3. Wand gemäß Anspruch 2, wobei der innere Unterabschnitt länger als der äußere Unterabschnitt ist.

4. Wand gemäß Anspruch 2, wobei sich die Scharniere über die gesamte periphere Breite der Füße erstrecken, wobei die Scharniere ausgebildet sind, indem sie eine verringerte radiale Dicke relativ zu dem inneren und dem äußeren Unterabschnitt aufweisen, und wobei sich die verringerte radiale Dicke an einer äußeren peripheren Oberfläche des Körpers befindet.

## Revendications

1. Attache (10) pour recevoir une fixation filetée (46), comprenant:
un corps unitaire sensiblement cylindrique (12) en matière plastique ayant un axe longitudinal (14) et le long duquel s'étend une cavité axiale (16), le corps présentant deux extrémités axiales;
une tête intérieure (18) située à une extrémité axiale et comportant un moyen de vissage (20) disposé dans sa cavité axiale (16);
une partie extérieure (22) située à l'autre extrémité axiale, comportant un moyen de retenue (24) pour limiter le déplacement axial de l'attache et traversée par la cavité axiale;
une partie centrale (28) disposée entre la tête intérieure et la partie extérieure, traversée par la cavité axiale et comportant quatre jambes (32) définies par quatre fentes longitudinales circonférentiellement espacées (30), et ayant des articulations (34, 36) définies sur la partie radialement extérieure du corps unitaire par une réduction localisée de section transversale des jambes, une articulation reliant chaque jambe à la tête intérieure et une articulation reliant chaque jambe à la partie extérieure et chaque jambe comportant une articulation intermédiaire (38) qui divise les jambes en sous-éléments intérieur et extérieur (40, 42) de sorte que le sous-élément intérieur est plus long que le sous-élément extérieur, les articulations étant sensiblement perpendiculaires à l'axe longitudinal ; et
la dite attache étant construite d'une manière telle que, en utilisation, la dite attache prend une configuration aplatie dans laquelle un point de chaque jambe proche de l'articulation intermédiaire est axialement plus près d'une extrémité extérieure de l'attache (10) que l'articulation (36) de sorte que, en utilisation, un point de chaque sous-élément extérieur proche de l'articulation intermédiaire est pressé contre une face d'un panneau (48) dans lequel est disposée l'attache, et de sorte que chaque sous-élément extérieur est espacé de la face du panneau dans lequel est disposée l'attache, et en outre le dit sous-élément intérieur est en contact de butée avec le dit sous-élément extérieur sur une région s'étendant radialement vers l'intérieur à partir de la dite articulation intermédiaire.

2. Mur structurel comprenant :
un panneau de mur (48) dans lequel est formé un trou s'étendant axialement à travers le dit panneau de mur ; et incluant :
une attache (10) reçue dans le dit trou pour recevoir une fixation filetée (46), la dite attache comprenant un corps unitaire sensiblement cylindrique (12) en matière plastique et s'étendant le long d'un axe longitudinal (14), le dit corps ayant une cavité axiale (16) qui s'étend entre deux extrémités axiales, une tête intérieure (18) définie à une première extrémité axiale du dit corps, la dite tête intérieure comportant un moyen de vissage intérieur (20), une partie extérieure (22) définie à l'autre extrémité axiale, la dite partie extérieure s'étendant axialement à travers le dit trou d'une manière telle qu'une extrémité axialement intérieure de la dite partie extérieure traverse le dit panneau de mur, et la dite partie extérieure comportant un moyen (24) de limitation du déplacement axial de la dite attache pour assurer que la dite attache ne passe pas entièrement axialement vers l'intérieur à travers le dit trou, et une partie centrale (28) définie entre la dite tête intérieure et la dite partie extérieure et ayant une pluralité de jambes (32) définies par un certain nombre de fentes longitudinales circonférentiellement espacées (30), des articulations (36) étant définies sur la partie radialement extérieure du dit corps par une réduction localisée de la section transversale des dites jambes, une première articulation reliant chaque jambe à la dite tête intérieure, une autre articulation reliant chaque jambe à la dite partie extérieure, et chaque jambe ayant une articulation intermédiaire (38) qui divise chaque jambe en sous-éléments intérieur et extérieur (40, 42) ; et
une fixation filetée (46) reçue dans la dite attache et comportant un filetage en prise avec le dit moyen de vissage intérieur dans la dite tête intérieure, la dite fixation filetée tirant la dite tête intérieure vers la dite partie extérieure jusqu'à ce que chaque jambe ait une région, adjacente à son articulation intermédiaire, qui est pressée contre une face du dit panneau, et chaque dit sous-élément extérieur de jambe qui s'étend à partir de la dite articulation intermédiaire étant relié à la dite partie extérieure et espacé du dit panneau, le dit sous-élément intérieur étant en contact de butée avec le dit sous-élément extérieur sur une région s'étendant radialement vers l'intérieur à partir de la dite articulation intermédiaire.

3. Mur selon la revendication 2, dans lequel le dit sous-élément intérieur est plus long que le dit sous-élément extérieur.

4. Mur selon la revendication 2, dans lequel les dites articulations s'étendent sur toute la largeur circonférentielle des dites jambes, les dites articulations étant formées par création d'une épaisseur radiale réduite par rapport aux dits sous-éléments intérieur et extérieur, et la dite épaisseur radiale réduite étant créée dans une surface périphérique extérieure du dit corps.
